# FASCICULE DE BREVET EUROPEEN

(11) **EP 0 867 343 B1**
(45) Date de publication et mention de la délivrance du brevet: **19.01.2000**
(21) Numéro de dépôt: 98105264.0
(22) Date de dépôt: 24.03.1998
(51) Int. Cl.: B60R 16/02

(54) **Support de contacteur tournant à pièce de masquage de la vis de fixation**
Drehschalterträger mit verborgener Befestigungsschraube
Rotative contact support with hidden fastening screw

(30) Priorité: 26.03.1997 FR 9703698
(43) Date de publication de la demande: 30.09.1998
(73) Titulaire: VALEO ELECTRONIQUE, 94042 Creteil Cédex (FR)
(72) Inventeur: Touroude, Laurent, 91710 Vert le Petit (FR); Lhernault, Alain, 77400 Chalifert (FR)
(74) Mandataire: Gamonal, Didier

(56) Documents cités:
- EP-A- 0 195 832
- EP-A- 0 315 979
- EP-A- 0 704 344
- EP-A- 0 709 253
- US-A- 4 789 342
- US-A- 4 867 688

## Description

La présente invention concerne un support placé sous le volant d'un véhicule automobile et portant un contacteur tournant, comportant deux parties coaxiales montées rotatives l'une par rapport à l'autre à l'encontre de moyens souples de liaison électrique.

Un tel contacteur comportant les caractéristiques définies dans le préambule de la revendication 1, est décrit par exemple dans le document FR-A-2 707 434.

Ainsi, après montage sur le véhicule, l'une des parties coaxiales est mobile en rotation en étant liée en rotation au volant de direction du véhicule automobile, tandis que l'autre partie est fixe en étant liée au tube fixe de la colonne de direction grâce au support comportant une ouverture traversée par l'arbre de direction.

Les moyens souples de liaison électrique sont enroulés en spirale à la manière d'un ressort de montre. Par exemple les moyens souples de liaison électrique peuvent consister en un ruban souple sous la forme de pistes conductrices, par exemple en cuivre, placées sur un film polyester recouvert d'un isolant électrique dit "Coverlay".

En variante le ruban peut comporter un ou plusieurs fils conducteurs souples parallèles et isolés entre eux. En variante le ruban peut être fractionné.

Dans tous les cas il est possible d'effectuer 1,75 à 3,5 tours de volant dans un sens ou dans l'autre.

Ce contacteur est fabriqué par un équipementier et est livré au constructeur automobile dans sa position moyenne ou médiane correspondant à une position - roues droites - du véhicule afin de pouvoir effectuer le nombre de tours de volant souhaité dans un sens ou dans l'autre.

Cela peut être réalisé par l'intermédiaire d'une étiquette adhésive qui se coupe lors de la première rotation du volant ou à l'aide de moyens mécaniques de blocage faisant appel par exemple à une vis de blocage.

Il se pose un problème lorsque, suite à une réparation du véhicule, par exemple dans un garage, l'on intervient sur le support et/ou sur le contacteur tournant.

En effet il peut être alors nécessaire par exemple de démonter le support puis de le remonter.

Il importe donc de démonter le contacteur dans sa position moyenne puis de le remonter dans cette position moyenne - roues droites - afin de pouvoir effectuer ultérieurement le nombre de tours de volant dans un sens et dans l'autre sans casser les moyens souples de liaison électrique ce qui n'est pas perçu par le conducteur et dangereux notamment lorsque le contacteur est associé à la commande d'un coussin de sécurité gonflable dit "air-bag".

Dans le document FR-A-2 707 434 il est prévu un dispositif compteur de tours et de blocage permettant à l'équipementier de livrer au constructeur automobile le contacteur tournant dans sa position moyenne. Ce dispositif comporte une roue menante, étagée en diamètre, dotée d'un ergot et d'un évidement et une roue menée, étagée en diamètre à dents de blocage et d'entraînement.

Avec ce dispositif un risque d'erreur subsiste car il est possible de démonter le support et donc le contacteur lorsque les roues du véhicule ne sont pas droites et de le remonter. Cette position ne correspondant pas à la position moyenne.

Il peut être souhaitable de conserver ce dispositif compteur de tours et de blocage.

La présente invention a pour objet de pallier ces inconvénients de manière simple et économique en tirant parti du dispositif compteur de tours et de blocage.

C'est donc un but de l'invention de créer un dispositif n'autorisant le démontage du commutateur tournant uniquement lorsque le contacteur tournant est dans sa position moyenne - roues droites -.

Suivant l'invention un support du type sus-indiqué, dans lequel la partie fixe porte une roue menée axialement étagée comportant un premier secteur d'extrémité non denté et dans lequel la partie mobile porte une roue menante axialement étagée destinée à entraîner la roue menée, est caractérisé en ce que la roue menante présente une came, tandis que le secteur d'extrémité du premier étage de la roue menée présente une creusure, en ce qu'une pièce de masquage est montée à articulation sur le support et présente une ouverture pour accès à la vis, et en ce que la pièce de masquage présente une bosse et un doigt pour venir en prise respectivement avec la came de la roue menante et ledit premier secteur d'extrémité de la roue menée en sorte que par rotation du volant, lorsque le doigt est logé dans la creusure, ladite ouverture permet d'accéder à la vis, tandis que lorsque le doigt s'échappe de la creusure, l'ouverture ne permet pas d'accéder à la vis.

Grâce à l'invention on ne peut démonter le support que lorsque les roues du véhicule sont droites et donc lorsque le contacteur tournant est dans sa position moyenne.

La pénétration du doigt dans la creusure est rendue possible grâce à la came qui permet au doigt de se rapprocher du centre de la roue menante.

Avantageusement la came présente une partie principale de forme circulaire interrompue par un dégagement disposé de manière globalement diamétralement opposé par rapport à un ergot d'entraînement de la roue menée, que présente la roue menante.

Le dégagement est, pour des raisons de simplicité, en forme de méplat.

La description qui va suivre illustre l'invention en regard des dessins annexés dans lesquels :
- la figure 1 est une vue de derrière d'un support de commutateurs équipé d'un contacteur tournant selon l'invention ;
- la figure 2 est une vue de face dudit support ;
- la figure 3 est une vue partielle de face sans le capot pour montrer le dispositif de masquage de la vis de réglage selon l'invention ;
- la figure 4 est une vue en coupe selon la ligne B-B de la figure 2 ;
- la figure 5 est une vue partielle schématique du dispositif de comptage de tours et de blocage ;
- les figures 6 à 9 sont des vues schématiques du dispositif de masquage selon l'invention avec modification de la pièce de masquage, pour différentes positions du volant.

Dans ces figures on voit en 1 un support nervuré de commutateurs comportant un nez 2 saillant axialement, en forme de douille, fractionné en secteur annulaire par des fentes borgnes.

Par simplicité on n'a pas représenté ici ces commutateurs placés sous le volant du véhicule pour commander de manière habituelle les fonctions d'essuyage, d'éclairage et de signalisation.

Ce support 1, placé sous le volant du véhicule, est avantageusement en matière plastique moulable et porte centralement un contacteur tournant 3, comprenant deux parties coaxiales 1,5 montées mobiles en rotation l'une par rapport à l'autre à l'encontre de moyens souples de transmission électrique 4 enroulées en spirale entre lesdites parties.

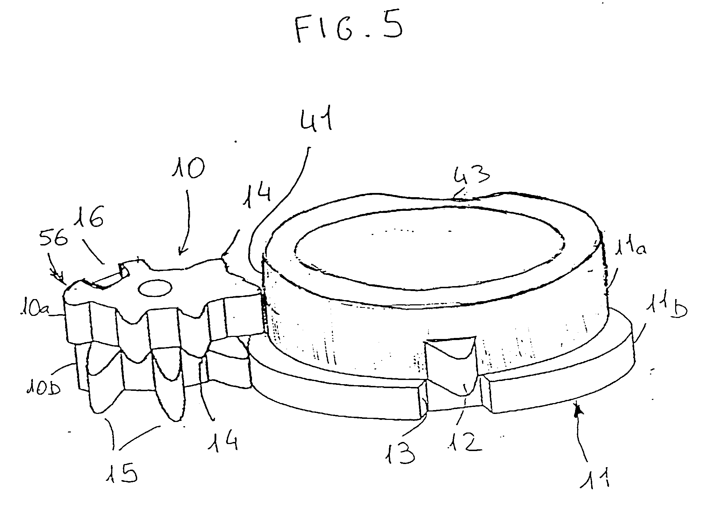

Ici le support 1 est creux centralement pour formation d'un réceptacle de réception des moyens souples 4 (figure 4) et constitue donc l'une des parties coaxiales du contacteur tournant 3, à savoir la partie fixe de celui-ci.

L'autre partie 5 du contacteur tournant est mobile en rotation par rapport au support fixe et comporte un moyeu 6 propre à être entraîné en rotation par le volant du véhicule. Pour ce faire (figure 4) le support 1 est conformé pour former centralement un palier en forme de cheminée pour le moyeu 6 au niveau de son ouverture centrale 7. Cette ouverture 7 est traversée par l'arbre de direction.

Le moyeu 6 est calé axialement d'un côté par le support 1 et de l'autre par un couvercle 17 fixé ici par encliquetage en bout du palier du support 1.

Les moyens souples de liaison électrique 4 sont enroulés en spirale à la manière d'un ressort de montre entre le support 1 et le moyeu 6. Chaque extrémité des moyens souples 4 est reliée à un dispositif de connexion 8,9 en forme de cheminée. Le dispositif 9 est solidaire du moyeu 6 et le dispositif 8 du support 1.

Grâce au contacteur tournant avec ses dispositifs de connexion 8,9, on peut assurer des liaisons électriques pour, par exemple, un coussin de sécurité dit "air-bag" et/ou un avertisseur sonore portés par le volant du véhicule.

Ici les moyens souples de liaison électrique 4 consistent en un ruban souple avec des pistes électriques placées sur un film polyester recouvert d'un isolant dit "coverlay".

Bien entendu, comme décrit dans le document FR-A-2 707 434, ces moyens souples 4 peuvent avoir une autre forme. De même le contacteur tournant peut être distinct du support 1 et être rapporté centralement sur celui-ci par exemple à l'aide d'oreilles de fixation et de vis. Dans tous les cas la partie fixe forme un boîtier pour réception des moyens souples. La forme d'un tel boîtier est mieux visible ici à la figure 4.

La partie fixe 1, ici le support, porte à rotation une roue menée 10 axialement étagée en diamètre, tandis que la partie mobile 5 porte une roue menante 11 axialement étagée en diamètre.

La constitution de ces roues est décrite dans le document FR-A-2 707 434 auquel on se reportera pour plus de précisions.

Pour mémoire on rappellera que la roue menante 11 comporte un étage de plus petit diamètre 11a avec un ergot 12 et un étage de plus grand diamètre 11b avec un évidement de dégagement 13 en regard de l'ergot 12.

La roue menée 10 comporte un premier étage 10a avec des dents d'entraînement 14 et un deuxième étage 10b avec des dents de blocage 15. Les étages 11a et 11b de la roue menante 11 sont lisses à l'exception de l'évidement 13 et de l'ergot 12. Les dents de blocage 15 par coopération avec l'étage 11b empêchent la roue menée 10 de tourner sauf lorsqu'une dent de blocage 15 est en face de l'évidement 13. Dans ce cas l'ergot 12 peut entraîner l'une des dents d'entraînement 14 et provoquer une rotation de la roue menée 10 d'une valeur d'une dent 15. Les dents 14 et 15 appartiennent à des secteurs dentés, les dents 14 étant décalées circonférentiellement par rapport aux dents 15.

Chaque étage de la roue menée 10 présente donc un secteur d'extrémité non denté. Ici le premier étage 10a de la roue menée présente un premier secteur d'extrémité 56 non denté doté d'une creusure 16 à sa périphérie externe selon l'une des caractéristiques de l'invention. Cette creusure 16, formant une échancrure ouverte vers l'extérieur, est délimitée latéralement par des bords inclinés comme visibles dans les figures 4 à 9.

Ici la roue menante 11 est solidaire du moyeu 6 en étant d'un seul tenant avec celui-ci avantageusement en matière plastique moulée. Cette roue 11 forme un flasque d'extrémité transversal pour le moyeu 6 et est montée rotative sur le support 1 par l'intermédiaire du moyeu 6.

Les roues 10,11 appartiennent donc de manière connue à un dispositif compteur de tours et de blocage et sont avantageusement en matière plastique pour réduire les inerties et éviter les phénomènes de corrosion.

Ici le support 1 est enfilé par son nez 2, déformable élastiquement radialement grâce aux fentes borgnes, sur le tube fixe (non visible) de la colonne de direction du véhicule.

La fixation du support 1 sur ledit tube est réalisée par serrage du nez sur le tube à l'aide d'un collier de serrage 17 mis sous tension grâce à un coin 18, formant clavette, en contact avec une rampe inclinée 19 issue du support 1. Le coin 18 est en prise avec une vis de fixation 20. La tête de la vis 20 comporte une empreinte 39 pour son entraînement en rotation par un outil et prend appui sur un épaulement transversal du support 1 (figure 4). La vis 20 est d'orientation axiale et traverse cet épaulement pour venir en prise par sa partie filetée avec un taraudage complémentaire que présente le coin 18 calé en rotation sur le support 1 grâce à un tenon radial engagé dans une rainure axiale formée dans la rampe.

Un ressort 21 agit axialement entre le coin 18 et le support 1 pour rattraper les jeux (figure 4). La vis 20 est donc mobile en rotation sous l'action d'un outil et fixe en translation, tandis que le coin 18 est fixe en rotation et mobile en translation. Le collier 17 est attelé au coin 18. A l'aide de la vis 20, on peut régler la tension du collier 17 et le serrage du nez 2 sur le tube de la colonne de direction. Le montage du support sur ledit tube fixe est donc rapide et est réalisé par la face avant du support 1 grâce à une unique vis 20 de fixation permettant de régler la tension du collier 17.

Un capot 22 de protection est rapporté par encliquetage sur la face avant du support 1 pour masquer le dispositif de blocage et compteur de tours à roue menée 10 et menante 11. Ce capot 22 présente bien entendu une ouverture 23 pour accès à la tête de la vis 20. Une autre ouverture 24 est également prévue pour vision de la roue menée 10 dotée de repères.

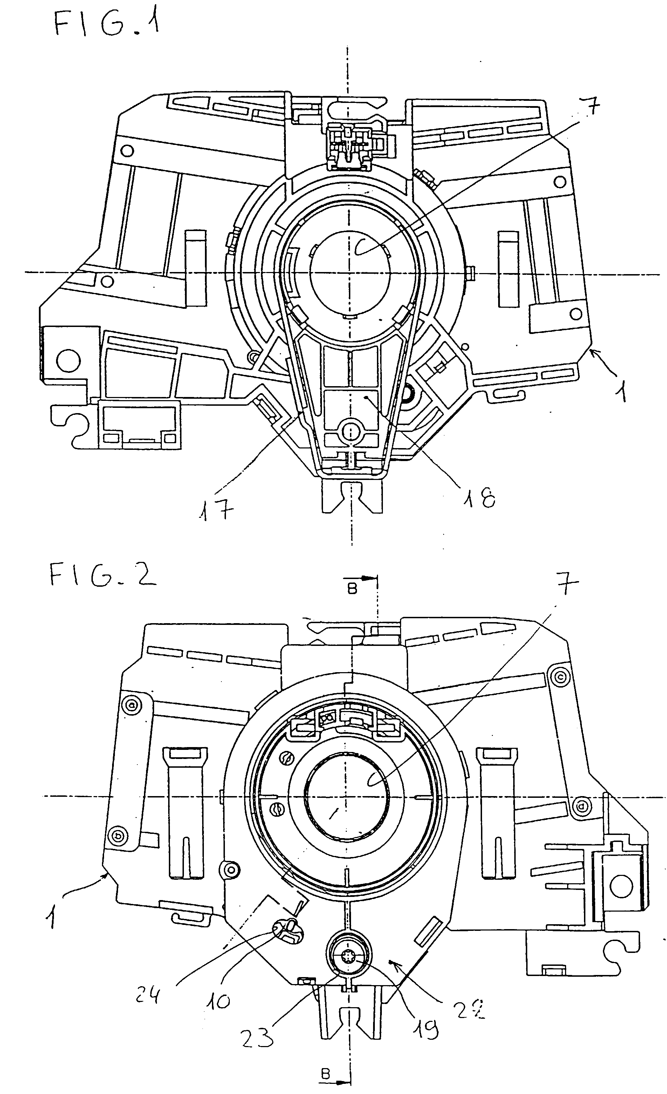

Dans les figures 1 à 4 les roues du véhicule sont droites et la tête de la vis 20 est accessible ; le contacteur 3 se trouvant alors en position moyenne de façon à pouvoir effectuer ici plus de deux tours de volant dans un sens et dans l'autre sans casser les moyens souples de transmission électrique 4.

Au montage du contacteur tournant sur le véhicule, il n'y a pas de problème car le contacteur est livré dans sa position moyenne. Par contre, si l'on démonte le support et donc le contacteur tournant lorsque les roues du véhicule ne sont pas droites, on est certain que le contacteur n'est pas dans sa position moyenne puisque le volant peut effectuer plus d'un tour dans un sens ou dans l'autre.

Ainsi l'invention propose de créer un dispositif de masquage permettant de démonter le support 1 pour effectuer des réparations seulement lorsque le contacteur est en position moyenne - roues droites - afin de ne pas casser ultérieurement lesdits moyens souples 4.

Il est ainsi prévu un dispositif de masquage 30 commandé par le dispositif de comptage de tours et de blocage à roue menante et menée.

Ce dispositif de masquage 30 comporte une pièce de masquage 31 masquant la tête de la vis de fixation 20 lorsque le contacteur tournant 3 n'est pas dans sa position moyenne - roues du véhicule droites. Pour ce faire la pièce de masquage 31 comporte une ouverture 32 d'accès à la tête de la vis 20 et est montée rotative à l'aide de moyens d'articulation 34 sur le support fixe 1, plus précisément sur une platine 35 que comporte ledit support. C'est sur cette platine 35, qu'est montée à rotation la roue menée 10 formant pignon. La pièce 31 est en forme de plaque plus longue que large s'étendant longitudinalement de part et d'autre du pignon 10. La pièce 31 présente centralement une ouverture 37 au niveau de la roue menée 10.

L'ouverture d'accès 32 est de diamètre supérieur à celui de la tête de la vis 20 et est implantée au niveau de l'un des bords latéraux de la plaque 31, tandis que les moyens d'articulation 34 sont montés au voisinage de l'autre des bords latéraux.

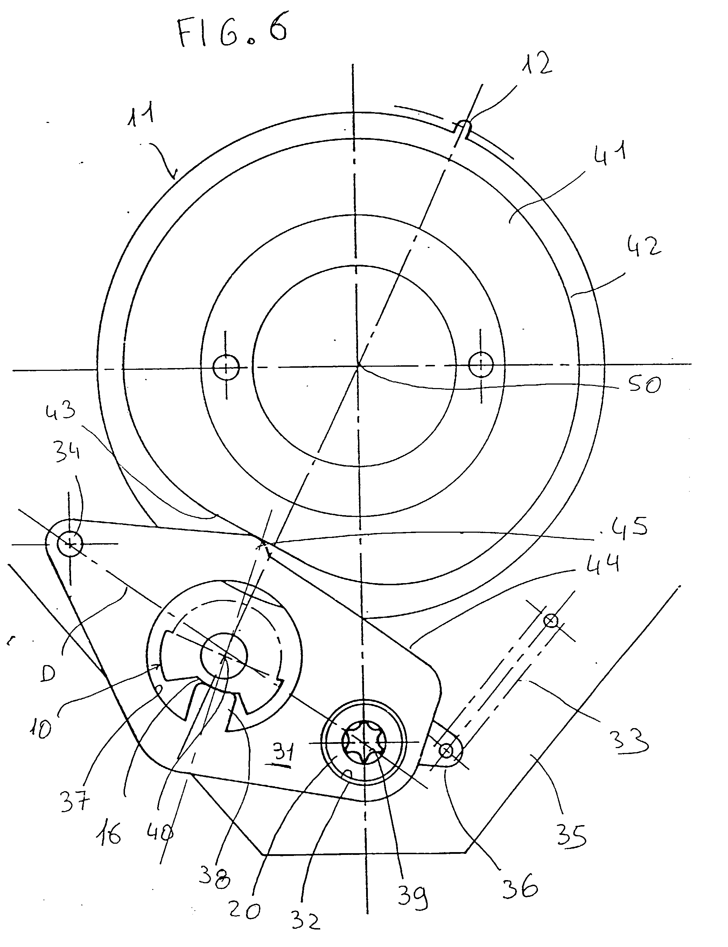

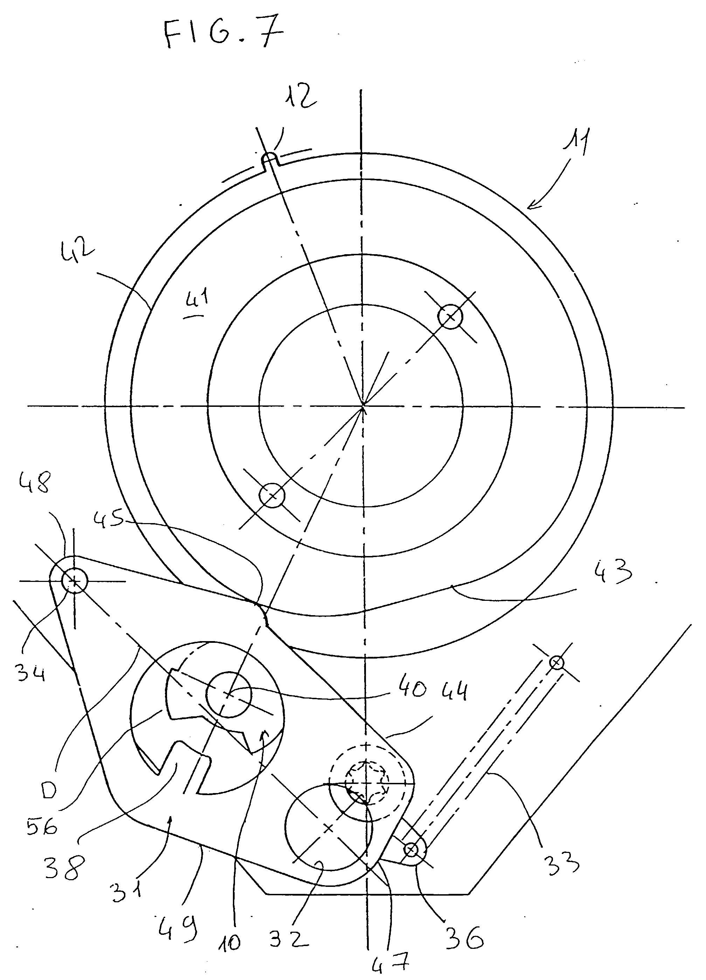

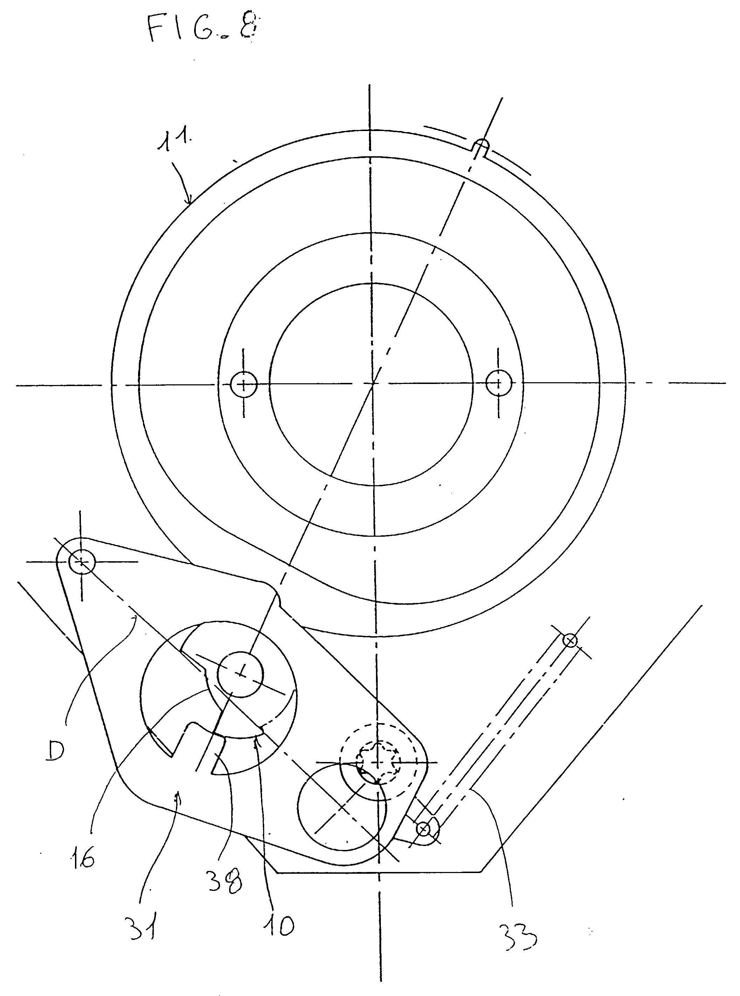

Un doigt 38, issu de la pièce 31, s'étend à l'intérieur de l'ouverture 37. Ce doigt 38 est propre à coopérer avec le premier étage 10a de la roue menée 10, plus précisément avec la partie non dentée de cet étage c'est-à-dire avec le premier secteur d'extrémité 56. Le doigt 38 est donc admis à pénétrer dans la creusure 16. Lorsque le doigt 38 pénètre dans la creusure 16 à bords latéraux inclinés (figure 6) les roues du véhicule sont droites, le contacteur tournant se trouve dans sa position moyenne et l'ouverture d'accès en regard de la tête de la vis de fixation 20. En dehors de cette position (figures 7 à 9), on ne peut avoir accès à l'empreinte de la tête de la vis 20 car la pièce 31 masque ladite empreinte référencée en 39 à la figure 8.

Dans les figures 7 à 9 la ligne D passant par le centre de l'ouverture 32 est toujours située en dessous du centre 40 de la roue menée 10. Par contre pour la position de la figure 6, qui est la seule à autoriser un accès à la vis 20 et donc à autoriser un démontage du support 1, cette ligne D se trouve au-dessus dudit centre 40. Ici le premier étage 11a de la roue menante 11 présente une surépaisseur 41 avec un contour en forme de came 42. Plus précisément le contour 42 est circulaire en majeure partie sauf sur une portion 43 globalement diamétralement opposée par rapport à l'ergot 12 de la roue menante 11. Cette portion 43 forme un dégagement de came en forme de méplat en sorte que la roue menante présente une came 41 globalement à profil en forme de coeur.

La surépaisseur 41 s'étend au-dessus de l'ergot 12 (figure 5).

Le bord supérieur longitudinal 44 de la plaque 31 présente une bosse 45, ici arrondie. La bosse 45 est alignée avec le doigt 38, l'axe de symétrie radial du doigt 38 passant globalement par le centre 40 de la roue menée 10 et par le centre de la bosse 45 (figure 6). Par ailleurs au voisinage de son ouverture 32, la plaque 31 présente une oreille 36 pour accrochage de l'une des extrémités d'un ressort de rappel 33, en forme de ressort à boudin, accroché à l'autre de ses extrémités à la platine 35. Cette oreille 36 s'étend en saillie par rapport au bord latéral de la plaque adjacent à l'ouverture. Ce bord latéral 47 est rectiligne. L'autre bord latéral 48, adjacent aux moyens d'articulation et effilé en étant de forme arrondie pour délimiter une bande de matière entre les moyens d'articulation 34 et la périphérie externe de la plaque.

Le bord longitudinal inférieur 49 de la plaque 31 est globalement de forme triangulaire. Le bord supérieur 44 est lui aussi globalement de forme triangulaire présentant, au niveau de son sommet, la bosse 45.

La plaque 31 est, pour des raisons d'encombrement, plus large au niveau de son ouverture d'accès 32, qu'au niveau des moyens d'articulation.

Ainsi qu'on l'aura compris, en faisant tourner le volant, on entraîne la roue menante 11.

Dans la position moyenne (figure 6) - roues droites - le doigt 38 est au contact du fond de la creusure 16 de la roue menée tandis que la bosse 45 est en contact globalement avec le milieu du dégagement de came 43 de la roue menante 11. L'ouverture 32 est en regard de la tête de la vis 20 dont l'empreinte 39 est accessible.

Dans cette position le doigt 38 est le plus proche possible du centre 50 de la roue menante grâce au dégagement 43 et à la creusure 16.

Lorsqu'à partir de cette position on tourne le volant, la roue menée 10 est alors bloquée car les dents de blocage 15 sont alors en dehors du dégagement 13 et l'ergot 12 échappe aux dents d'entraînement 14. Un déplacement relatif se produit entre la bosse 45 et le dégagement 43.

Ce déplacement entraîne un pivotement de la plaque 31 car, du fait du profil du dégagement de came 43, la bosse 45 s'éloigne du centre de rotation 50 de la roue menante 11.

Ce pivotement entraîne un soulèvement du doigt 38. Ainsi au bout de 1/8 de tours on se trouve dans la position de la figure 7 dans laquelle la roue menée 10 est toujours fixe en rotation, tandis que la bosse 45 rentre en contact avec la partie circulaire du contour 42. Le pivotement de la plaque 31 cesse car la bosse 45 est alors à distance constante du centre de rotation 50.

Le doigt 38 est alors à distance de la roue menée et de la creusure 16 et est donc soulevé, tandis que l'accès à la tête de vis est masqué.

Au bout d'un tour de volant (figure 8), la bosse 45 se retrouve au niveau du centre de dégagement 43 mais à distance de celui-ci. Suite à ce tour de volant l'ergot 12 peut entraîner en rotation la roue menée 10 car le dégagement 13 est en regard d'une dent de blocage 15, tandis que l'ergot 12 est en prise avec une dent d'entraînement 14.

La rotation de la roue menée 10 entraîne que le doigt 38 est admis à venir en contact avec la partie pleine du premier secteur d'extrémité 56 non denté du premier étage 10a de la roue menée. Ainsi on se retrouve dans la situation de la figure 8.

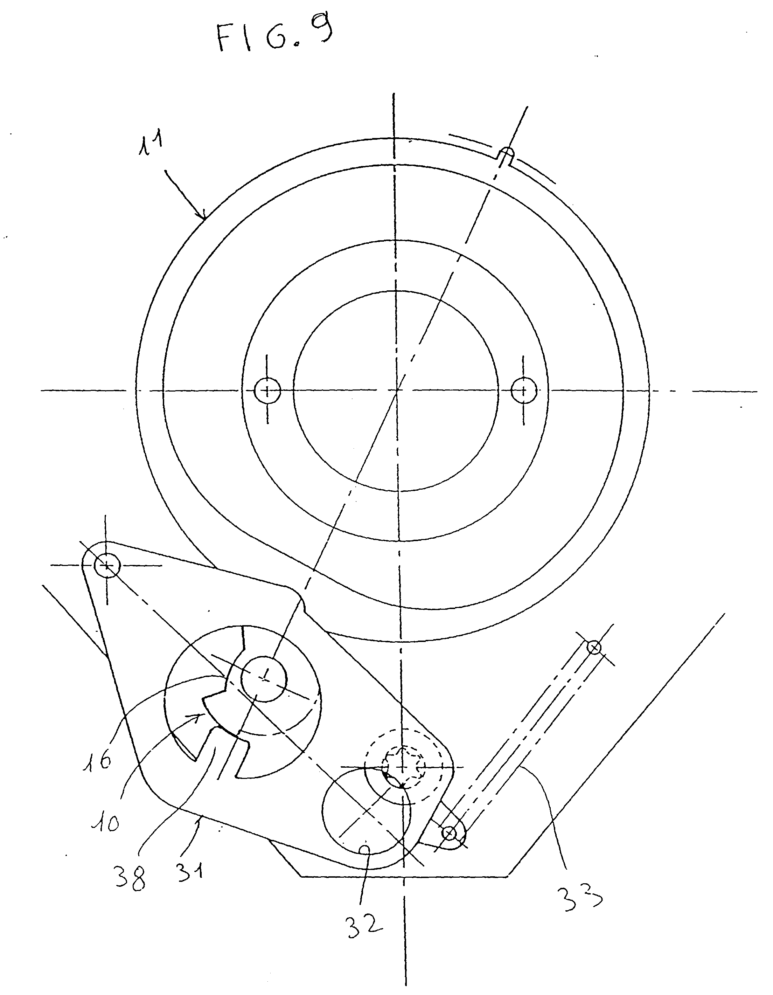

Au bout de deux tours de volant (figure 9) la roue menée peut de nouveau tourner et le doigt 38 reste en contact avec la partie pleine du premier secteur d'extrémité 56 non denté du premier étage 10a.

Grâce à la creusure 16, à la bosse 45 et au dégagement 43, on ne peut avoir accès à la tête de la vis 20 que pour la position moyenne de la figure 6.

Ainsi selon l'invention la roue menante 11 présente une came 42,43 avec une partie principale de forme circulaire interrompue par un dégagement de came 43 disposé de manière globalement opposé par rapport à l'ergot 12.

Le doigt 38 est logé dans la creusure 16 du secteur d'extrémité non denté de la roue menée 10 seulement lorsque les roues du véhicule sont droites et le contacteur tournant 3 en position moyenne. Pour cette position l'ouverture 32 permet d'accéder à la vis 20. Dans les autres positions du volant, le doigt 38 s'échappe de la creusure 16 et l'ouverture 32 ne permet pas d'accéder à la vis 20.

Le doigt 38 peut donc venir en prise avec la came 42,43 et avec le premier secteur d'extrémité 56.

On notera que le ressort de rappel 33 évite tout jeu et maintient la pièce de masquage constamment en appui soit sur la came 42,43 soit sur le secteur non denté de la roue menée 10, soit au contact de l'échancrure 16 (figure 6) soit à l'écart du secteur 16 (figures 7 à 9).

L'invention tire parti du blocage de la roue menée 10 qui ne peut tourner que lorsque l'ergot 12 de la roue menante 11 est en prise avec les dents d'entraînement, tandis qu'une dent de blocage 15 est en regard de l'évidement 13.

On appréciera que la réalisation est économique, la pièce de masquage 31 étant peu coûteuse.

Les moyens d'articulation 34 peuvent consister en des pions solidaires de la pièce 31 et venant en prise avec des logements du capot 22 et de la platine. L'inverse est également possible. Bien entendu le collier 17 peut avoir une autre forme par exemple comme décrit dans la demande FR96 06655 car l'ergot 12 est à distance de la roue menée.

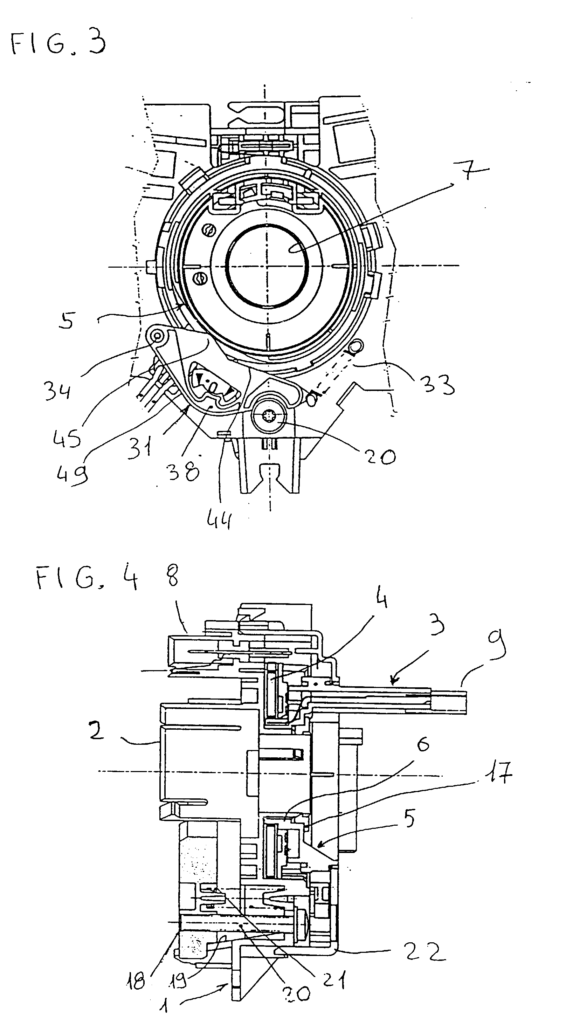

Bien entendu la pièce 31 peut avoir une autre forme. Ainsi à la figure 3 l'ouverture d'accès 32 ne consiste pas en un trou à contour fermé comme dans les figures 6 à 9, mais en une échancrure ouverte en direction du bord inférieur 49. Le bord supérieur 44 est également modifié et est délimité par deux triangles dirigés en sens inverse.

## Revendications

1. Support portant, d'une part, une vis (20) pour sa fixation sur le tube fixe de la colonne de direction d'un véhicule automobile et, d'autre part, un contacteur tournant (3) comportant deux parties coaxiales (1,5) montées mobiles en rotation l'une par rapport à l'autre à l'encontre de moyens souples de transmission électrique (4), dans lequel une première des parties coaxiales (1) est fixe en étant solidaire du support (1), tandis que l'autre partie coaxiale (5) est mobile en rotation en étant solidaire en rotation du volant du véhicule et dans lequel, pour formation d'un dispositif de couplage de tour et de blocage, la partie fixe (1) porte une roue menée (10) étagée avec des dents d'entraînement (14) et des dents de blocage (15), tandis que la partie mobile (5) porte une roue menante (11) étagée avec un ergot (12) pour contact avec les dents d'entraînement et un évidement de dégagement (13) pour pénétration d'une dent de blocage (15) et déverrouillage de la roue menée, les dents d'entraînement (14) appartenant à un premier étage (10a) comportant un premier secteur d'extrémité (56) non denté, caractérisé en ce que la roue menante présente une came (42,43), tandis que ledit premier secteur d'extrémité (56) du premier étage (10a) de la roue menée (10) présente une creusure (16), en ce qu'une pièce de masquage (31) est montée à articulation sur le support (1) et présente une ouverture (32) pour accès de la vis (20) et en ce que la pièce de masquage (31) présente une bosse (45) et un doigt (38) pour venir en prise respectivement avec la came (42,43) de la roue menante (11) et ledit premier secteur d'extrémité (56) de la roue menée (10) en sorte que, par rotation du volant, lorsque le doigt (38) est logé dans la creusure (16), ladite ouverture (32) permet d'accéder à la vis, tandis que lorsque le doigt (38) s'échappe de la creusure (16) l'ouverture (32) ne permet pas d'accéder à la vis (20).

2. Support selon la revendication 1, caractérisé en ce que la came (42,43) présente une partie principale de forme circulaire interrompue par un dégagement (43) disposé de manière globalement diamétralement opposé par rapport à l'ergot (12).

3. Support selon la revendication 1, caractérisé en ce que le dégagement (43) est en forme de méplat.

4. Support selon l'une quelconque des revendications 1 à 3, caractérisé en ce que le doigt (38) s'étend à l'intérieur d'une ouverture (37).

5. Support selon l'une quelconque des revendications précédentes, caractérisé en ce que la ligne (D), passant par le centre des moyens d'articulation (34) de la pièce de masquage (31) et par le centre de l'ouverture d'accès (32), est située en-dessous du centre (40) de la roue menée (10) lorsque le doigt (38) n'est pas engagé dans la creusure (16), et est situé au-dessus du centre (40) de la roue menée (10) lorsque le doigt est engagé dans la creusure (16).

6. Support selon l'une quelconque des revendications 1 à 5, caractérisé en ce que la pièce de masquage (31) est soumise à l'action d'un ressort de rappel (33) accroché à ladite pièce (31) au voisinage de l'ouverture d'accès (32) pour solliciter la pièce de masquage (31) en direction de la roue menante (11).

7. Support selon l'une quelconque des revendications 1 à 6, caractérisé en ce que la bosse (45) appartient au bord supérieur (44) de la pièce de masquage (31).

8. Support selon la revendication 7, caractérisé en ce que ledit bord supérieur (44) a une forme triangulaire, la bosse (45) étant implanté globalement au sommet dudit bord.

## Patentansprüche

1. Träger, der einerseits eine Schraube (20) für seine Befestigung am ortsfesten Rohr der Lenksäule eines Kraftfahrzeugs und andererseits einen Drehschalter (3) trägt, umfassend zwei koaxiale Teile (1, 5), die im Verhältnis zueinander entgegen biegsamen elektrischen Übertragungsmitteln (4) gelagert sind, bei dem ein erster der koaxialen Teile (1) ortsfest ist, wobei er fest mit dem Träger (1) verbunden ist, während der andere koaxiale Teil (5) drehbeweglich ist, wobei er drehfest mit dem Lenkrad des Fahrzeugs verbunden ist, und bei dem zur Bildung einer Umdrehungszähler- und Sperrvorrichtung der ortsfeste Teil (1) ein abgestuftes getriebenes Rad (10) mit Mitnahmezähnen (14) und Sperrzähnen (15) trägt, während der bewegliche Teil (5) ein abgestuftes treibendes Rad (11) mit einem Vorsprung (12) für den Kontakt mit den Mitnahmezähnen und eine Absatzaussparung (13) für das Eindringen eines Sperrzahns (15) und die Freigabe des getriebenen Rads trägt, wobei die Mitnahmezähne (14) zu einer ersten Stufe (10a) gehören, die einen ersten nicht gezahnten Endsektor (56) umfaßt, **dadurch gekennzeichnet,** daß das treibende Rad einen Nocken (42, 43) aufweist, während der besagte erste Endsektor (56) der ersten Stufe (10a) des getriebenen Rads (10) eine Einsenkung (16) aufweist, daß ein Abdeckteil (31) gelenkig am Träger (1) gelagert ist und eine Öffnung (32) für den Zugang zur Schraube (20) aufweist und daß das Abdeckteil (31) eine Ausbauchung (45) und einen Finger (38) aufweist, um mit dem Nocken (42, 43) des treibenden Rads (11) bzw. mit dem besagten ersten Endsektor (56) des getriebenen Rads (10) in Eingriff zu kommen, so daß durch eine Drehung des Lenkrads die besagte Öffnung (32), wenn der Finger (38) in der Einsenkung (16) aufgenommen ist, den Zugang zur Schraube ermöglicht, während die Öffnung (32) den Zugang zur Schraube (20) nicht ermöglicht, wenn der Finger (38) aus der Einsenkung (16) austritt.

2. Träger nach Anspruch 1, **dadurch gekennzeichnet**, daß der Nocken (42, 43) einen Hauptteil mit einer Kreisform aufweist, die durch einen Absatz (43) unterbrochen wird, der insgesamt diametral entgegengesetzt zum Vorsprung (12) angeordnet ist.

3. Träger nach Anspruch 1, **dadurch gekennzeichnet,** daß der Absatz (43) in Form einer Abflachung ausgeführt ist.

4. Träger nach einem der Ansprüche 1 bis 3, **dadurch gekennzeichnet,** daß sich der Finger (38) im Innern einer Öffnung (37) erstreckt.

5. Träger nach einem der vorangehenden Ansprüche, **dadurch gekennzeichnet**, daß sich die Linie (D), die durch den Mittelpunkt der Gelenkmittel (34) des Abdeckteils (31) und durch den Mittelpunkt der Zugangsöffnung (32) verläuft, unterhalb des Mittelpunkts (40) des getriebenen Rads (10) befindet, wenn der Finger (38) nicht in die Einsenkung (16) eingesetzt ist, und sich oberhalb des Mittelpunkts (40) des getriebenen Rads (10) befindet, wenn der Finger in die Einsenkung (16) eingesetzt ist.

6. Träger nach einem der Ansprüche 1 bis 5, **dadurch gekennzeichnet,** daß das Abdeckteil (31) der Wirkung einer Rückstellfeder (33) ausgesetzt ist, die an dem besagten Abdeckteil (31) in der Nähe der Zugangsöffnung (32) eingehakt ist, um das Abdeckteil (31) in Richtung des treibenden Rads (11) zu beaufschlagen.

7. Träger nach einem der Ansprüche 1 bis 6, **dadurch gekennzeichnet**, daß die Ausbauchung (45) zur Oberkante (44) des Abdeckteils (31) gehört.

8. Träger nach Anspruch 7, **dadurch gekennzeichnet,** daß die besagte Oberkante (44) eine Dreieckform hat, wobei die Ausbauchung (45) insgesamt am Scheitel der besagten Kante angeordnet ist.

## Claims

1. A support piece carrying, firstly, a screw (20) for fastening it on the fixed tube of the steering column of a motor vehicle, and secondly, a rotary contacter (3) comprising two coaxial parts (1, 5) which are mounted for rotation of one with respect to the other against the action of resilient electrical transmission means (4), wherein a first one of the coaxial parts (1) is fixed, being secured to the support piece (1), while the other coaxial part (5) is rotatable and is fixed in rotation to the steering wheel of the vehicle, and wherein, for constituting a turning and blocking coupling device, the fixed part (1) carries a driven wheel (10) which is stepped with driving teeth (14) and blocking teeth (15), while the movable part (5) carries a stepped driving wheel (11) with a lug (12) for contact with the driving teeth, and a relieving recess (13) for penetration of a blocking tooth (15) and for unlocking the driven wheel, the driving teeth (14) being part of a first stage (10a) having an untoothed first terminal sector (56), characterised in that the driving wheel has a cam (42, 43), while the said first terminal sector (56) of the first stage (10a) of the driven wheel (10) is formed with a rebate (16), in that a masking member (31) is articulated on the support piece (1) and has an aperture (32) for access of the screw (20), and in that the masking member (31) has a boss (45) and a finger (38) for making engagement, respectively, with the cam (42, 43) of the driving wheel (11) and the said first terminal sector (56) of the driven wheel (10), so that, on rotation of the steering wheel, when the finger (38) is engaged in the rebate (16), the said aperture (32) affords access for the screw, while, when the finger (38) escapes from the rebate (16), the aperture (32) does not afford access to the screw (20).

2. A support piece according to Claim 1, characterised in that the cam (42, 43) has a circular main portion interrupted by a recess (43) which is disposed generally diametrically opposite the lug (12).

3. A support piece according to Claim 1, characterised in that the recess (43) is in the form of a flat.

4. A support piece according to any one of Claims 1 to 3, characterised in that the finger (38) extends into an opening (37).

5. A support piece according to any one of the preceding Claims, characterised in that the line (D) passing through the centre of articulating means (34) of the masking member (31), and through the centre of the access aperture (32), is situated below the centre (40) of the driven wheel (10) when the finger (38) is not engaged in the rebate (16), and is situated above the centre (40) of the driven wheel (10) when the finger is engaged in the rebate (16).

6. A support piece according to any one of Claims 1 to 5, characterised in that the masking member (31) is subjected to the action of a return spring (33) hooked on the said member (31) in the vicinity of the access aperture (32), so as to bias the masking member (31) towards the driving wheel (11).

7. A support piece according to any one of Claims 1 to 6, characterised in that the boss (45) is part of the upper edge (44) of the masking member (31).

8. A support piece according to Claim 7, characterised in that the said upper edge (44) has a triangular form, the boss (45) being located generally at the summit of the said edge.
